# EUROPEAN PATENT APPLICATION

(11) **EP 4 309 493 A1**
(43) Date of publication of application: **24.01.2024**
(21) Application number: 23157182.9
(22) Date of filing: 17.02.2023
(51) Int. Cl.: A01G 31/02

(54) **APPARATUS FOR TRANSFERRING A GUTTER FOR HYDROPONICS AND HYDROPONICS SYSTEM INCLUDING THE SAME**

(30) Priority: 22.07.2022 KR 20220091235
(71) Applicant: Agricultural Corporation Essence Farm, Icheon-si, Gyeonggi-do 17319 (KR)
(72) Inventor: KIM, Kisung, 17319 Gyeonggi-do (KR); JUNG, Hee-Cheol, 17319 Gyeonggi-do (KR); SHIN, Chang-Shik, 17319 Gyeonggi-do (KR)
(74) Representative: AWA Sweden AB

(57) **Abstract**

Disclosed are an apparatus for transferring a gutter for hydroponics, and a hydroponics system including the same. The apparatus includes a movement guide having a groove defined thereinextending along a gutter movement direction; and pushing means configured to reciprocate in the gutter movement direction, wherein the first push block array includes a plurality of first push blocks arranged in a first row along the gutter movement direction and spaced from each other by a first spacing, wherein the second push block array includes a plurality of second push blocks arranged in a second row along the gutter movement direction and spaced from each other by a second spacing different from the first spacing, wherein each of the first and second push blocks is rotatable around a rotation axis, wherein the rotation axis is positioned at an eccentric position of each of the first and second push blocks.

## Description

### BACKGROUND

### 1. Field of Invention

The present disclosure relates to an apparatus for transferring a gutter for hydroponics and a hydroponics system having the same. More specifically, the present disclosure relates to an apparatus for transferring a gutter for hydroponics that may transfer the gutter while setting a variable spacing between adjacent gutters along a gutter movement direction, and a hydroponics system having the same.

### 2. Description of Related Art

Generally, nutrient liquid cultivation is to grow crops by supplying nutrient liquid to a medium such as rock wool, perlite, gravel, pit, or sawdust.

In this nutrient liquid cultivation, crops are grown using specially designed cultivation beds. Most of currently used cultivation beds are made of Styrofoam or plastic.In this regard, the cultivation bed is formed in a structure in which crops are arranged and spaced from each other by a fixed spacing on a predefined sized plate.

The cultivation bed made of Styrofoam or plastic has advantages such as semi-permanent use and convenience of work. However, when using the cultivation bed made of Styrofoam, a spacing between crops cannot be freely adjusted. Therefore, a famers hould arrange gutters so as to be spaced from each other by a spacing while considering a crop size at planting thereof and a crop sizeat harvesting thereof .Therefore, the gutters are displaced such that the spacing there between is adjusted based on a type of the crop to be grown and/or a growth timing thereof.

However, conventionally, the growth of the cropto be cultivated varies depending on a type of the crop. A conventional gutter transferring device transfers the gutters to be spaced from each other by a specific spacing.

Accordingly, only one type of the crop may be cultivated in one type of the gutter transferring device. Thus,a harvestamount is lowered and an installation area of the device is increased.

Prior art literature: Patent Literature: Korean Patent No. 10-1826336 (Issue date: January 31, 2018)

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

A purpose of the present disclosure is to provide an apparatus for transferring a gutter for hydroponics in which moving units arranged so as to be spaced from each other by different gutter movement spacing is implemented into one body, so that the gutter movement spacing may be variably set according to a growth amount of the crop. Further, a purpose of the present disclosure is to providea hydroponic system having the apparatus.

Further, a purpose of the present disclosure isto provide a hydroponic systemincluding an apparatus for transferring a gutter for hydroponics, wherein when a gutter movement spacing is set, the hydroponic systemmay automatically supply nutrient liquid required for crop growth to each gutter displaced by the set gutter movement spacingby the apparatus.

To achieve the above purposes, the present disclosure provides an apparatus for transferring a gutter for hydroponics.

A first aspect of the present disclosure provides an apparatus for transferring a gutter for hydroponics, the apparatus comprising: a movement guide having a groove defined therein, wherein the groove extendsalong a gutter movement direction; andpushing means configured to reciprocate in the gutter movement direction under external power, wherein the pushing means includes first and second push block arrays disposed in the groove of the movement guide,wherein the first push block array includes a plurality of first push blocks arranged in a first row along the gutter movement direction and spaced from each other by a first spacing, wherein the second push block array includes a plurality of second push blocks arranged in a second row along the gutter movement direction and spaced from each other by a second spacing, wherein the first and second rows are adjacent to each other in a perpendicular direction to the gutter movement direction,wherein the first and second spacings are different from each other, wherein each of the first and second push blocks is rotatable around a rotation axis, wherein the rotation axis is positioned at an eccentric position of each of the first and second push blocks, wherein each of the first and second push blocks switches to between a push-able state capable of pushing the gutter and a non-push-able state of non-capable of pushing the gutter.

In one implementation of the first aspect, the pushing means has a partitioning plate to separate the first and second rows from each other.

In one implementation of the first aspect, the pushing means includes first and second support frames corresponding to the first and second frames, wherein the first support frame supports the first push blocks, and the second support frame supports the second push blocks, wherein first and second support framesare adjacent to each other and are integral to each other or are detachably coupled to each other.

In one implementation of the first aspect, the pushing means further includes a support frame having both opposing sidewalls and a bottom connecting the both opposing sidewalls to each other, wherein the support frame supports the first and second push blocks, wherein first holes are defined in each of the both opposing sidewalls and are arranged in the gutter movement direction and are spaced from each other by the first spacing,wherein second holes are defined in each of the both opposing sidewalls and are arranged in the gutter movement direction and are spaced from each other by the second spacing,wherein the pushing means further includes:first rotation shafts rotatably respectively received in the first holes and respectively fixed to the eccentric positions of the first push blocks; andsecond rotation shafts rotatably respectively received in the second holes and respectively fixed to the eccentric positions of the second push blocks.

In one implementation of the first aspect, one face of an upper portion of each of the first and second push blocks acts as a push face in close contact with and pushing one face of the gutter.

In one implementation of the first aspect, a weight having a predetermined weight is disposed in a lower portion of each of the first and second push blocks such that each of the first and second push blocks rotates so as to stand upright and thus is brought into the push-able state.

In one implementation of the first aspect, each of the first and second holes extends in an elongate manner and in the gutter movement direction such that a position of each of the first and second rotation shafts is displaced along the gutter movement direction.

In one implementation of the first aspect, shaft-receiving grooves are defined in a bottom face of each of the first and second elongate holes and are arranged in the gutter movement direction and are spaced from each other,wherein each ofthe rotation shafts is inserted into one of the shaft-receiving grooves and is rotatably received therein.

A second aspect of the present disclosure providesan apparatus for transferring a gutter for hydroponics, the apparatus comprising: a movement guide having a groove defined therein, wherein the groove extendsalong a gutter movement direction; andpushing means configured to reciprocate in the gutter movement direction under external power, wherein the pushing means includes a plurality of first push blocks and a plurality of second push blocks disposed in the groove of the movement guide,wherein the first and second push blocks are arranged in a single row along the gutter movement direction, wherein the plurality of first push blocks are spaced from each other by a first spacing,wherein the plurality of second push blocks are spaced from each other by a second spacing different from the first spacing,wherein each of the first and second push blocks is rotatable around a rotation axis, wherein the rotation axis is positioned at an eccentric position of each of the first and second push blocks, wherein each of the first and second push blocks switches to between a push-able state capable of pushing the gutter and a non-push-able state of non-capable of pushing the gutter, wherein the first push blocks switches to the push-able state while the second push blocks switches to the non-push-able state; orthe first push blocks switches to the non-push-able state while the second push blocks switches to the push-able state.

In one implementation of the second aspect, the apparatus further comprises an elevator operating under control of a controller, wherein the elevator moves up or down each of the first and second push blocks such that each of the first and second push blocks switches to the push-able state or the non-push-able state, respectively.

In one implementation of the second aspect, the apparatus further comprises a gear rotating under control of a controller, wherein the gear is couped to a rotation shaft coupled to each of the first and second push blocks, wherein the gear rotates such that each of the first and second push blocks switches to the push-able state or the non-push-able state.

A third aspect of the present disclosure providesa hydroponics system comprising: the apparatus for transferring the gutter as defined above; and a nutrient liquid supply for supplying a preset supply amount of nutrient liquid to the gutter displaced by a selected one of the first and second reference spacings.

According to the apparatus for transferring the gutter for hydroponics, the moving units arranged so as to be spaced from each other by different gutter movement spacing is implemented into one body, so that the gutter movement spacing may be variably set according to a growth amount of the crop.

Further, according to the hydroponic system including the apparatus for transferring a gutter for hydroponics,when the gutter movement spacing is set, the hydroponic system may automatically supply nutrient liquid required for crop growth to each gutter displaced by the set gutter movement spacing by the apparatus.

In addition to the above-described effects, specific effects of the present disclosure will be described together while describing specific details for carrying out the disclosure below.

### BRIEF DESCRIPTION OF DRAWINGS

FIG. 1 is a diagram showing a schematic configuration of a hydroponics system having an apparatus for transferring a gutter for hydroponics according to the present disclosure.
FIG. 2 and FIG. 3 are perspective views showing a gutter displaced by an apparatus for transferring the gutter for hydroponics according to the present disclosure.
FIG. 4 is a perspective view showing an apparatus for transferring a gutter for hydroponics according to the present disclosure.
FIG. 5 is a plan view showing an apparatus for transferring a gutter for hydroponics according to the present disclosure.
FIG. 6 is a cross-sectional view taken along a line A-A of FIG. 5.
FIG. 7 is a perspective view showing the pushing means in the apparatus for transferring the gutter for hydroponics according to the present disclosure.
FIG. 8 is a perspective view showing a state in which first and second push blocks according to the present disclosure are arranged.
FIG. 9 is a plan view showing the state in which the first and second push blocks according to the present disclosure are arranged.
FIG. 10A and FIG. 10B are a perspective view showing a push block according to the present disclosure.
FIG. 11 and FIG. 12 are views showing an installation state of adriver cylinder according to the present disclosure.
FIG. 13 is a conceptual diagram showing a hydroponics system according to the present disclosure.
FIG. 14 is a diagram showing a state in which the gutter is pushed and displaced by the first push blocks.
FIG. 15 is a diagram showing a state in which the first gutter is discharged to the gutter discharge area.
FIG. 16 is a diagram showing a state in which a new gutter is supplied to the gutter supply area.
FIG. 17 is a diagram showing a process for pushing the new gutter of FIG. 16 using the pushing means according to the present disclosure.
FIG. 18A and FIG. 18B and FIG. 18C are a diagram showing a process in which the gutters may be pressed by the first push blocks.
FIG. 19 is a diagram showing a process of moving the new gutter of FIG. 17 along a gutter supply direction.
FIG. 20 is a diagram showing another example of varying each of a spacing the first push blocks and a spacing between the second push blocks.
FIG. 21 is a diagram showing an example in which rotation support holes are formed in the rotation hole of FIG. 20.
FIG. 22 is a diagram showing another example of an apparatus for transferring a gutter for hydroponics according to the present disclosure.
FIG. 23 is a diagram showing still another example of an apparatus for transferring a gutter for hydroponics according to the present disclosure.
FIG. 24 is a plan view showing a configuration in which each of first and second push blocks is rotatable.
FIG. 25 is a diagram showing a configuration of the hydroponics system according to the present disclosure.
FIG. 26 and FIG. 27 are diagrams showing other examples of pushing means according to the present disclosure, respectively.
FIG. 28 is a diagram showing another example of pushing means according to the present disclosure.

### DETAILED DESCRIPTIONS

For simplicity and clarity of illustration, elements in the figures are not necessarily drawn to scale. The same reference numbers in different figures represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, an angle, a number, etc. disclosed in the drawings for illustrating embodiments of the present disclosure are illustrative, and the present disclosure is not limited thereto. The same reference numerals refer to the same elements herein. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entirety of list of elements and may not modify the individual elements of the list. When referring to "C to D", this means C inclusive to D inclusive unless otherwise specified.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In addition, it will also be understood that when a first element or layer is referred to as being present "on" or "beneath" a second element or layer, the first element may be disposed directly on or beneath the second element or may be disposed indirectly on or beneath the second element with a third element or layer being disposed between the first and second elements or layers.

It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In one example, when a certain embodiment may be implemented differently, a function or operation specified in a specific block may occur in a sequence different from that specified in a flowchart. For example, two consecutive blocks may actually be executed at the same time. Depending on a related function or operation, the blocks may be executed in a reverse sequence.

In descriptions of temporal relationships, for example, temporal precedent relationships between two events such as "after", "subsequent to ", "before", etc., another event may occur therebetween unless "directly after", "directly subsequent" or "directly before" is not indicated.

The features of the various embodiments of the present disclosure may be partially or entirely combined with each other, and may be technically associated with each other or operate with each other. The embodiments may be implemented independently of each other and may be implemented together in an association relationship.

Spatially relative terms, such as "beneath," "below," "lower," "under," "above," "upper," and the like, may be used herein for ease of explanation to describe one element or feature's relationship to another element or feature as illustrated in the figures. It will be understood that the spatially relative terms are intended to encompass different orientations of the device in use or in operation, in addition to the orientation depicted in the figures. For example, when the device in the figures is turned over, elements described as "below" or "beneath" or "under" other elements or features would then be oriented "above" the other elements or features. Thus, the example terms "below" and "under" may encompass both an orientation of above and below. The device may be otherwise oriented for example, rotated 90 degrees or at other orientations, and the spatially relative descriptors used herein should be interpreted accordingly.

Hereinafter, an apparatus for transferring a gutter for hydroponics and a hydroponic system having the same according to the present disclosure will be described with reference to the accompanying drawings.

The hydroponics system according to the present disclosure includes an apparatus for transferring a gutter for hydroponics.

First, theapparatus for transferring a gutter for hydroponics according to the present disclosure will be described.

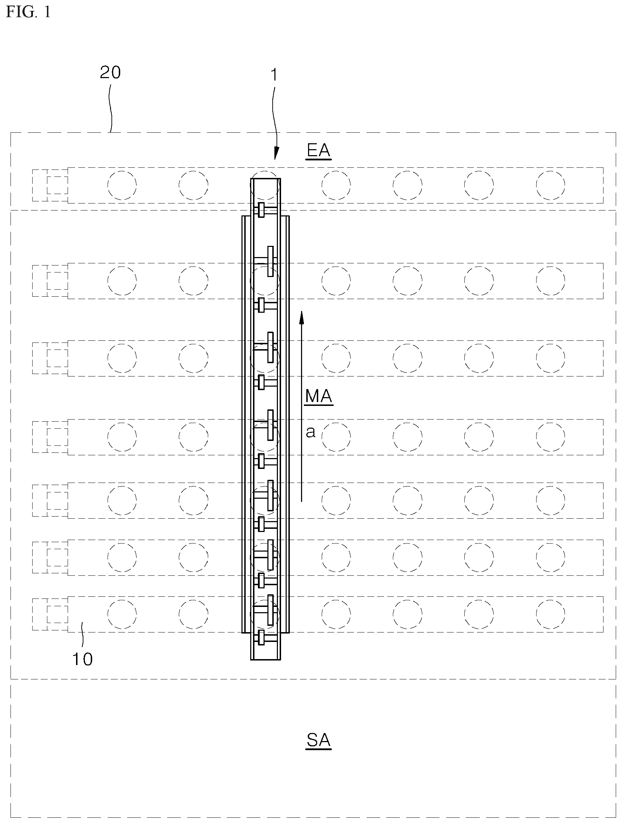

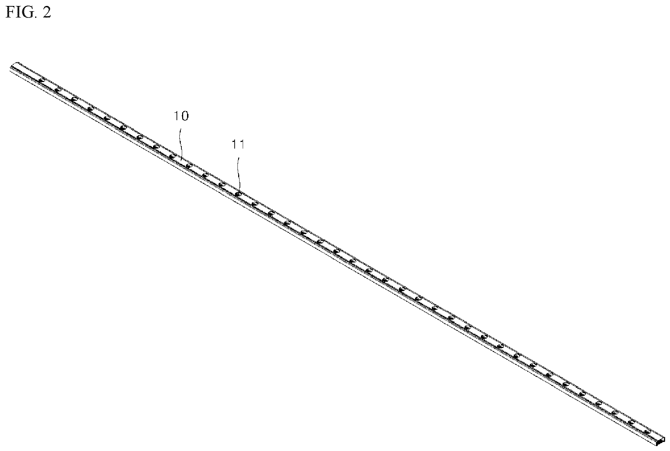

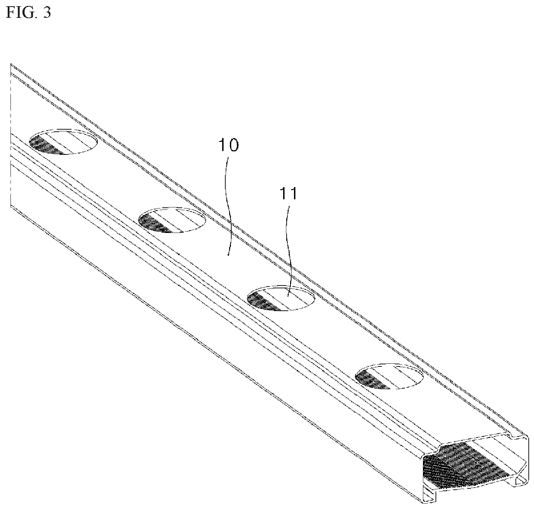

FIG. 1 is a diagram showing a schematic configuration of a hydroponics system having an apparatus for transferring a gutter for hydroponics according to the present disclosure.FIG. 2 and FIG. 3 are perspective views showing the gutter displaced by the apparatus for transferring the gutter for hydroponics according to the present disclosure.

Referring to FIG. 1, the hydroponic system according to the present disclosure has a main body 20. A gutter supply area SA from which the gutter 10 is supplied is formed at one side of the main body 20, and a gutter discharge area EA is formed at the other side of the main body 20.Then, a gutter movement area MA is formed between the gutter supply area SA and the gutter discharge area EA.A gutter movement path is formed in the gutter movement area MA. The gutter movement path connects the gutter supply area SA and the gutter discharge area EA to each other.In the gutter movement area MA, the supplied gutter 10 is displaced along the gutter movement direction a.In this regard, the apparatus 1 for transferring the gutter according to the present disclosure transfers the gutter along the gutter movement direction a while the supplied gutters 10 are spaced from each other by one set reference spacing among various set reference spacings.The various reference spacings may be predetermined based on types of crops inserted into the gutters.

The hydroponics system according to the present disclosure includes theapparatus for transferring the gutter for hydroponics.

Referring to FIG. 2 and FIG. 3, a gutter 10 according to the present disclosure is formed in a tubular shape with a predefined length.A plurality of receiving holes 11 are formed in an upper end of the gutter 10 and are arranged and spaced from each other by a predefined spacing along a longitudinal direction of the gutter 10. Each of crop units (not shown) is inserted into each of the plurality of receiving holes 11. The crop units may be of the same type of the crops.

Next, the apparatus 1 for transferring a gutter for hydroponics according to the present disclosure will be described.

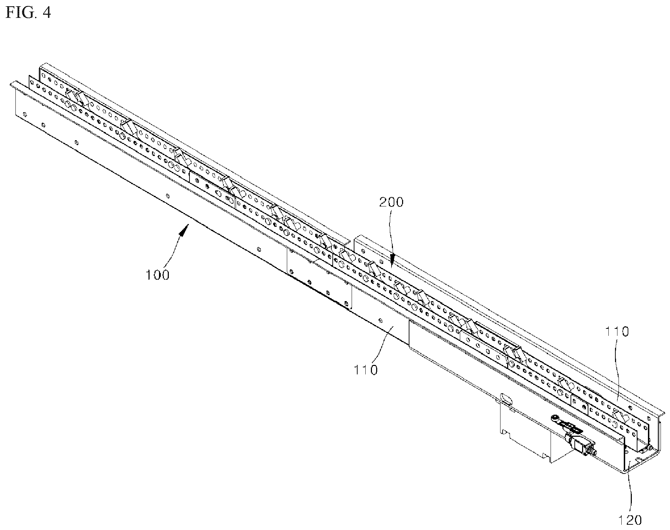

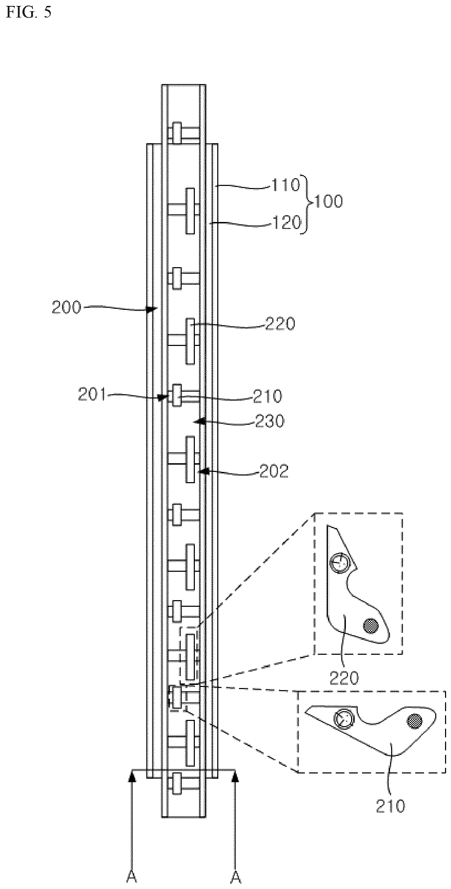

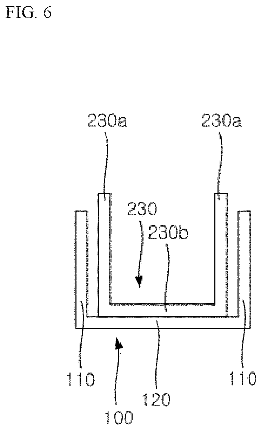

FIG. 4 is a perspective view showing an apparatus for transferring a gutter for hydroponics according to the present disclosure.FIG. 5 is a plan view showing an apparatus for transferring a gutter for hydroponics according to the present disclosure.FIG. 6 is a cross-sectional view taken along A-A of FIG. 5.

Referring to FIG. 4, the apparatus for transferring the gutter for hydroponics according to the present disclosure includes a movement guide 100 and pushing means 200.

Each of the above components will be described.

### Movement guide 100

As shown in FIG. 4, the movement guide 100 according to the present disclosure has a movement groove defined therein and extends along the gutter movement direction and has a predefined length.In this regard, the gutter movement direction a is preset.

Referring to FIG. 4, the movement guide 100 is embodied as a frame having a predefined length.The frame may be made of a metal, and an outer surface thereof may be coated with a certain paint to prevent rust.

A cross-sectional shape of the movement guide 100 is a 'U' shape.That is, the movement guide 100 is composed of a pair of sidewalls 110 having a predefined length, and abottom 120 connecting the first sidewalls 110 to each other. Accordingly, an inner space is definedby the first sidewalls 110 and the bottom 120 of the movement guide 100 and is exposed upwardly. A vertical level of a top surface of the pair of the sidewalls 110 is constant. The inner space may act as a movement groove 101 in and along which the pushing means 200 may be displaced.

Substantially, the gutter 10 having a predefined length is seated on an upper end of the pair of the sidewalls 110, and the top surface of the sidewalls 110 may guide movement of the gutter 10.Accordingly, the top surface of each of the sidewalls 110 may be smooth.

### Pushing means 200

Referring to FIG. 5 and FIG. 6, the pushing means 200 according to the present disclosure is disposed in the movement groove 101 of the movement guide 100.The movement groove 101 may bethe inner space definedbythe pair of the sidewalls 110 and the bottom 120.

The pushing means 200 may reciprocate under external power, andmay include pushblocks 210 and 220 which may be receivedin the movement groove 101 of the movement guide 100 and arranged in a plurality of rows. The push blocks 210 and 220 may be arranged and spaced from each other by different reference spacings along the gutter movement direction a.The push blocks 210 and 220 may be rotatable and have eccentric rotation axis position, and may be in a push-able state in which the push blocks 210 and 220 can push the gutter 10.

The external power may be a forceunder actuation of a device such as a cylinder. The pushing means 200 may be capable of linearly reciprocating movement under the external power.

The present disclosure typically describes that the number of rows is two. However, the present disclosure is not limited thereto. In another example, the push blocks 210 and 220 according to the present disclosure may be arranged in at least threerows.

The pushing means 200 mainly includes a support frame 230 and first and second push units 201 and 202.

In following descriptions, each of push unitsarranged ina first row is referred to as the first push unit 201, and each of push unitsarranged in the second row is referred to as the second push unit 202.

As shown in FIG. 6, the support frame 230 has a predefined length, and hasa cross-sectional shape of a 'U' shape.The support frame 230 is movably disposed in the movement groove 101 of the movement guide 100.

In this regard, the support frame 230 has both opposing sidewalls 230a and a bottom 230b. The bottom 230b connects lower ends of the both opposing sidewalls 230a to each other. A width of each of the both opposing sidewalls 230a is smaller than aspacing between the sidewalls of the movement guide 100as described above. A top face of each of the both opposing sidewalls 110 of the movement guide 100 is disposed at a lower level than that ofatop face of each of the both opposing sidewalls 230a of the support frame 230 as shown in FIG. 6.

Further, rotation holes 231 and 232may be formed in both opposing sidewalls of the support frame 230 and may be arranged along a longitudinal direction of the support frame 230.The rotation holes 231 and 232may be spaced from each other by a predefined spacing along the longitudinal direction of the support frame 230.

The rotation holes 231 and 232 include first rotation holes 231 in which first rotation shafts 215 are rotationally received respectively, and second rotation holes 232 in which second rotation shafts 225 are rotationally received respectively.

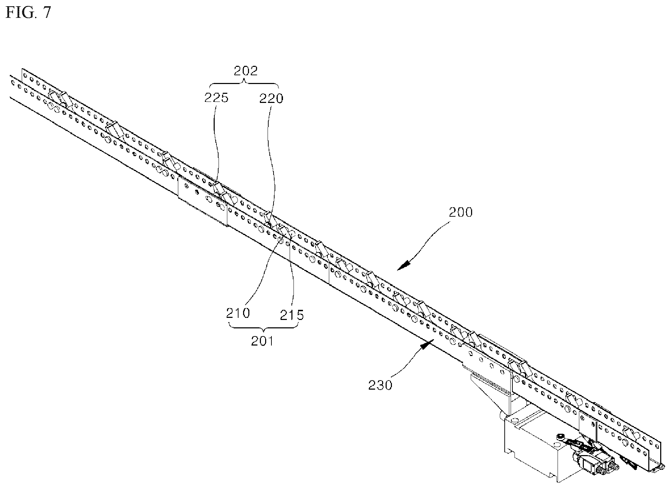

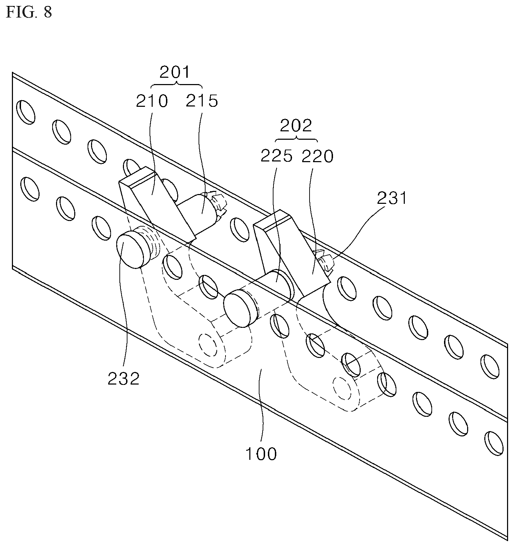

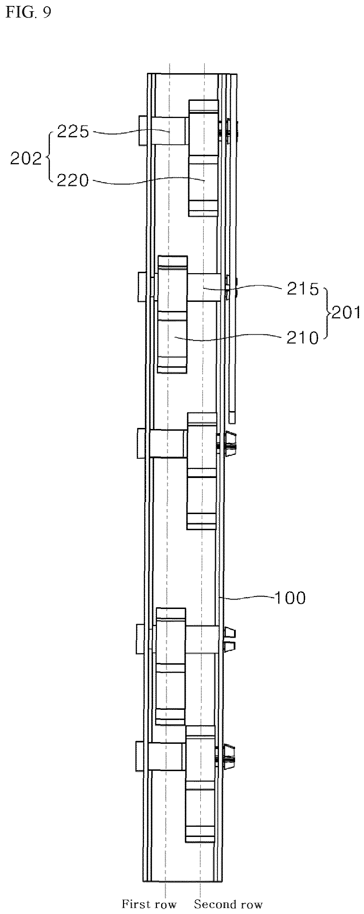

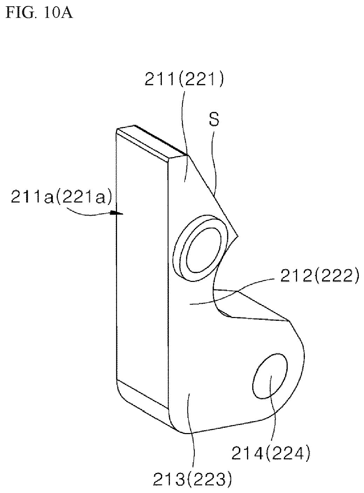

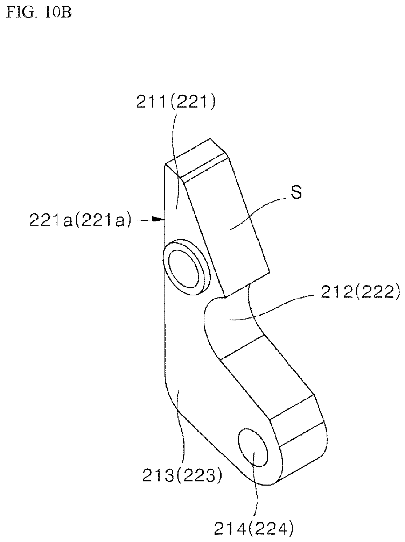

FIG. 7 is a perspective view showing the pushing means in the apparatus for transferring the gutter for hydroponics according to the present disclosure.FIG. 8 is a perspective view showing a state in which first and second push blocks according to the present disclosure are arranged.FIG. 9 is a plan view showing the state in which the first and second push blocks according to the present disclosure are arranged. FIG. 10A and FIG. 10B are a perspective view showing a push block according to the present disclosure.

### First push unit 201

Referring to FIG. 7 to FIG. 10C, the first push unit 201 according to the present disclosure includes the first rotation shaft 215 and the first push block 210.The first rotation shafts 215 are arranged and spaced from each other by a preset first reference spacing d 1. The first rotation holes 231 are arranged and spaced from each other by a preset first reference spacing d1. Each of both opposing ends of each first rotation shaft 215 is rotatably inserted in each first rotation hole 231.

Each of the first push blocks 210 is coupled to each of the first rotation shafts 215 and thus rotates together with the rotation of the rotation shaft. The first push blocks 210 are arranged along the first row.

The first push blocks 210 have the same shape as each other.

Each of the first push blocks 210 includes a first upper body 211, a first lower body 213, and a first connection body 212 connecting the first upper body 211 and the first lower body 213 to each other.

The first upper body 211 is formed in a right-angled triangle shape.One face of the first upper body 211 is flat. The flat facemay bea push face 211a that closely adheres to and presses a rear face of the gutter 10.

The first connection body 212 extends from a bottom of the first upper body 211.The first connection body 212 is formed to be recessed toward the push face 211a of the first upper body 211.

The first lower body 213 is connected to a lower end of the first connection body 212.The first lower body 213 protrudes rearwardly beyond the first connection body 212.The rearward direction is a direction opposite to the gutter movement direction a.

Accordingly, the first push block 210 is generally formed in an L shape in a side cross-sectional view.

Further, the first rotation shaft 215 extends through and is fixed to the first upper body 211.Thus,the first rotation shaft 215 is fixed to the first push block 210 at an eccentric position from a center of the first push block 210.

Thus, a weight of the first lower body 213 may be larger than a weight of the first upper body 211 due to the above configuration, such thatfirst push block 210 stands upright while the first upper body 211 is located above the first lower body 213.

That is, the first push block 210 may be brought into a push-able state in which the push face 211a of the first upper body 211 can push the gutter. That is, the first upper body 211 stands upright so as to be in a push-able state.In the push-able state, the push face 211a of the first upper body 211 faces in the gutter movement direction a.

In addition, the first lower body 213 may further have a weight 214 having a certain weight.

Since the weight of the first lower body 213 may be larger than the weight of the first upper body 211 due to the weight of the weight 214, the first push block 210 may be more easily brought into in a standing upright state such that the first lower body 213 is located above the first upper body 211.

Accordingly, the first push blocks 210 according to the present disclosure may be arranged along the first row and may stand upright and thus may be in a push-able state.

Further, the push-able staterefers to a state where the push face 210a of the first push blocks 210 may be in close contact with the rear face of the gutter 10 and may press the rear face of the gutter 10.

An upper end of each of the first push blocks 210 may protrude upwardlybeyond a top of the support frame 230 and thus may be exposed to an outside in the push-able state.

### Second push unit 202

The second push block 220 according to the present disclosure may be formed in substantially the same shape as the first push block 210 as described above.

The second push unit 202 according to the present disclosure includes the second rotation shaft 225 and the second push block 220.The second rotation shafts 225 are arranged and spaced from each other by a preset second reference spacing d2. The second rotation holes 232 are arranged and spaced from each other by a preset second reference spacing d2. Each of both opposing ends of each second rotation shaft 225 is rotatably inserted in each second rotation hole 232.In this regard, the second reference spacing is different from the above-mentioned first reference spacing.

Preferably, the second push blocks 220 are arranged along the second row.The second row is adjacent to the firstrowas described above.

Each of the second push blocks 220 is coupled to each of the second rotation shafts 225 and thus rotates together with the rotation of the second rotation shaft. The second push blocks 220 are arranged along the second row.The second push blocks 220 have the same shape as each other.

Each of the second push blocks 220 includes a second upper body 221, a second lower body 223, and a second connection body 222 connecting the second upper body 221 and the second lower body 223 to each other.

The second upper body 221 is formed in a right-angled triangle shape. One face of the second upper body 221 is flat. The flat face may be a push face 221a that closely adheres to and presses a rear face of the gutter 10.

The second connection body 222 extends from a bottom of the second upper body 221. The second connection body 222 is formed to be recessed toward the push face 221a of the second upper body 221.

The second lower body 223 is connected to a lower end of the second connection body 222. The second lower body 223 protrudes rearwardly beyond the second connection body 222. The rearward direction is a direction opposite to the gutter movement direction a.

Accordingly, the second push block 220 is generally formed in an L shape in a side cross-sectional view.

Further, the second rotation shaft 215 extends through and is fixed to the second upper body 221. Thus, the second rotation shaft 215 is fixed to the second push block 220 at an eccentric position from a center of the second push block 220.

Thus, a weight of the second lower body 223 may be larger than a weight of the second upper body 221 due to the above configuration, such that second push block 220 stands upright while the second upper body 221 is located above the second lower body 223.

That is, the second push block 220 may be brought into a push-able state in which the push face 221a of the second upper body 221 can push the gutter. That is, the second upper body 221 stands upright so as to be in a push-able state. In the push-able state, the push face 221a of the second upper body 221 faces in the gutter movement direction a.

In addition, the second lower body 223 may further have a weight 224 having a certain weight.

Since the weight of the second lower body 223 may be larger than the weight of the second upper body 221 due to the weight of the weight 224, the second push block 220 may be more easily brought into in a standing upright state such that the second lower body 223 is located above the second upper body 221.

Accordingly, the second push blocks 220 according to the present disclosure may be arranged along the second row and may stand upright and thus may be in a push-able state.

Further, the push-able state refers to a state where the push face 220a of the second push blocks 220 may be in close contact with the rear face of the gutter 10 and may press the rear face of the gutter 10.

An upper end of each of the second push blocks 220 may protrude upwardly beyond a top of the support frame 230 and thus may be exposed to an outside in the push-able state. At this time, a lower end of each of the second push blocks 220 is supported on the bottom 110b of the support frame 230.Each of the second push blocks 220 may maintain an erected state or a standing upright state.

Further, a rear face of each of the first upper body 211 of the first push block 210 and the second upper body 221 of the second push block220may be an inclined face S gradually inclined along the gutter movement direction a.

Further, a rotation angle range of each of the first and second push blocks 210 and 220 may be preset.The rotation angle range may be in a range of 0 degrees to 90 degrees.The 0 degree may be a rotation angle at a state in which each of the first and second push blocks 210 and 220 is positioned in thepush-able state.

Then, each of the first and second push blocks 210 and 220 in the push-able statemay be pressed by an external force and thus may be rotated by 90 degrees along the counterclockwise direction. Then, the external force may beremoved such that each of the first and second push blocks 210 and 220 is rotated back to the push-able stateunder each of the weights of the weights 214 and 224.The external force may refer to a force from the supplied gutter 10 which may press an upper end of each of the first and second push blocks 210 and 220 along the gutter movement direction a.

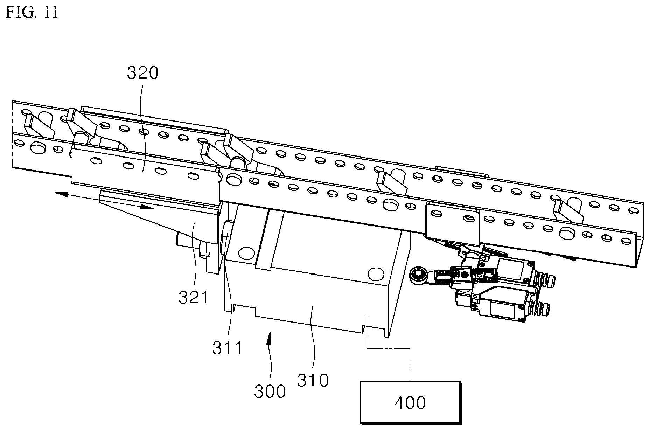

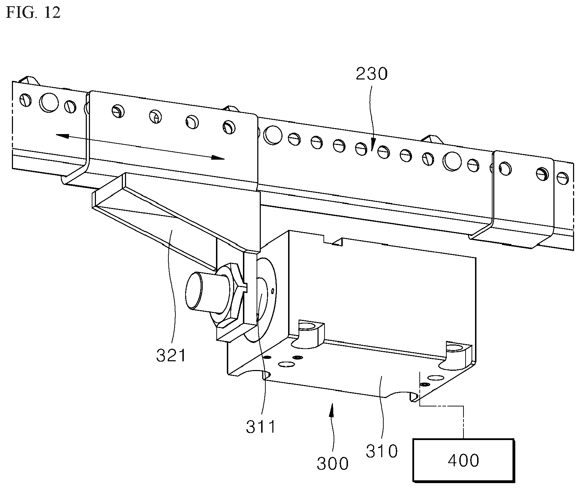

FIG. 11 and FIG. 12 are views showing an installation state of adriver cylinder according to the present disclosure.

Referring to FIG. 11 and FIG. 12, thedriver cylinder 300 according to the present disclosure has a cylinder body 310 having an extendable and retractable cylinder shaft 311, a fixed member 321 and a fixed bracket 320.The cylinder body 310 is installed to be fixed to the movement guide 100.An opening (not shown) through whichthe cylinder shaft 311 and a portion of the fixed member 321 pass is formed in a bottom face of the movement guide 100.The portion of the fixed member 321 may pass through the opening and be positioned on the bottom of the support frame 230.

The fixed member 321 is fixed to the cylinder shaft 311.The fixed member 321 may pass through the openingand may be exposed to a bottom of the support frame 230.The opening is formed in a shape of a hole having a width and a predefined length along the gutter movement direction a.

A lower end of the fixed bracket 320 is fixed to an upper end of the fixed member 321.The fixed bracket 320 is fixed to both opposing sidewalls of the support frame 230. A position at which the fixed bracket 320 is fixed to both opposing sidewalls of the support frame 230may varyusing bolt coupling means (not shown).

The cylinder body 310 may extend and retract the cylinder shaft 311 under control of a controller 400.

Accordingly, the pushing means 200 may reciprocate along the gutter movement direction a according to the extending and retracting operation of the cylinder shaft 311.

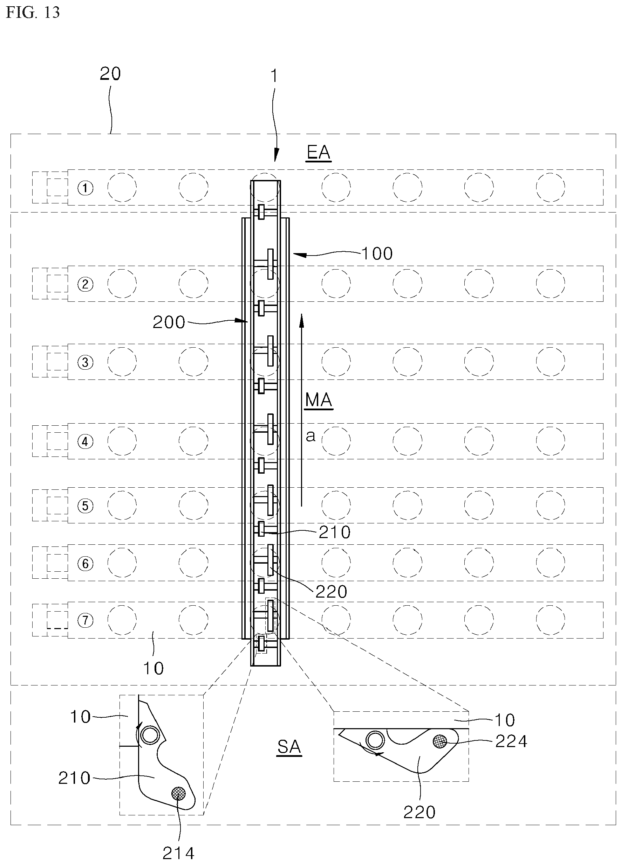

FIG. 13 is a conceptual diagram showing a hydroponics system according to the present disclosure.

Referring to FIG. 13, the hydroponics system has the above-described apparatus 1 for transferring the gutter 10.

The gutter movement direction a is set in the hydroponics system.

The gutter supply area SA extending in a perpendicular manner to the gutter movement direction a is defined at a front end of the system in the gutter movement direction a.The gutter 10 with a predefined length moves from the gutter supply area SA to the gutter movement area MA and then moves along the gutter movement direction a to the gutter discharge area EA.

The gutter 10 is displacedby the first reference spacing or the second reference spacing in the gutter movement area MAby theapparatus 1 for transferring the gutter 10 according to the present disclosure.

In this regard, each of the gutter supply area SA and the gutter discharge area EA has a moving roller device (not shown) for moving the gutter 10.Each of the moving roller devices is driven under control of the controller 400.

The controller 400 according to the present disclosure may set a pushwait position of thepushing means. A push wait position ofthe pushing means is an initial wait position before the pushing means 200 moves along the gutter movement direction a. This setting may be achieved under actuation of the driver cylinder 300.

The push wait position ofthe pushing means includes a first wait position and a second wait position.

The first wait position refers to a position used to sequentially move the supplied gutter 10 by the first reference spacing. The second wait position refers to a position used to sequentially move the supplied gutter 10 by the second reference spacing.

An operation of moving the gutter by the first reference spacing or the second reference spacing will be described with reference to the above configuration.

The first push blocks arranged along the first row are spaced from each other by the first reference spacing along the gutter movement direction. The second push blocks arranged along the second row are spaced from each otherby the second reference spacing along the gutter movement direction.

FIG. 13 shows a state in which first to seventh gutters 10 aredisplaced bytheapparatus 1 according to the present disclosure by the first reference spacing along the gutter movement direction a.

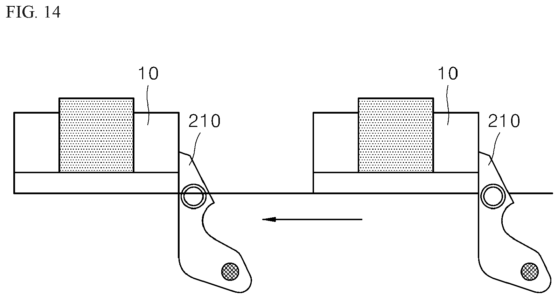

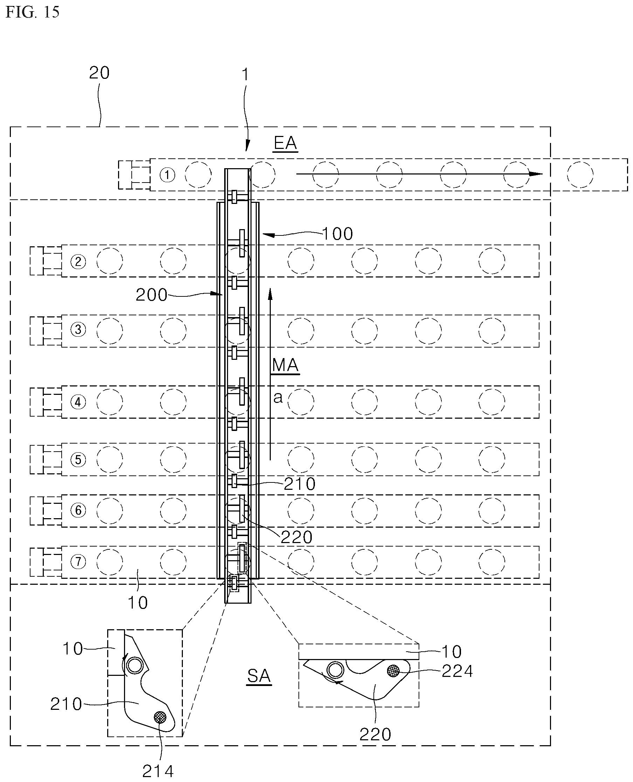

FIG. 14 is a diagram showing a state in which the gutter is pushed and displaced by the first push blocks.FIG. 15 is a diagram showing a state in which the first gutter is discharged to the gutter discharge area.

Referring to FIG. 13 and FIG. 14, when the controller 400 according to the present disclosure sets the first reference spacing, the controller 400 controlsthe driver cylinder 300 to move the support frame 230 of the pushing means 200.

In this regard, the first push block 210 at one end of the support frame 230 is rotated to the push-able state in which the first push block 210 stands upright. At the same time, the second push block 220neighboringthe first push block 210 may not be positioned at the first wait position. That is, the first push blocks 210 may be in the push-able state in which the first push block 210 stands upright so as to press the rear face of each gutter 10. Then, the second push blocks 220 are rotated so as to contact a bottom face of each gutter 10.Accordingly, the second push blocks 220 may not contact the rear face of each gutter 10.

Then, as shown in FIG. 15, the firstgutter 10 may bedisplaced along the gutter movement direction a and may be discharged to the gutter discharge area EA and then to an outside.

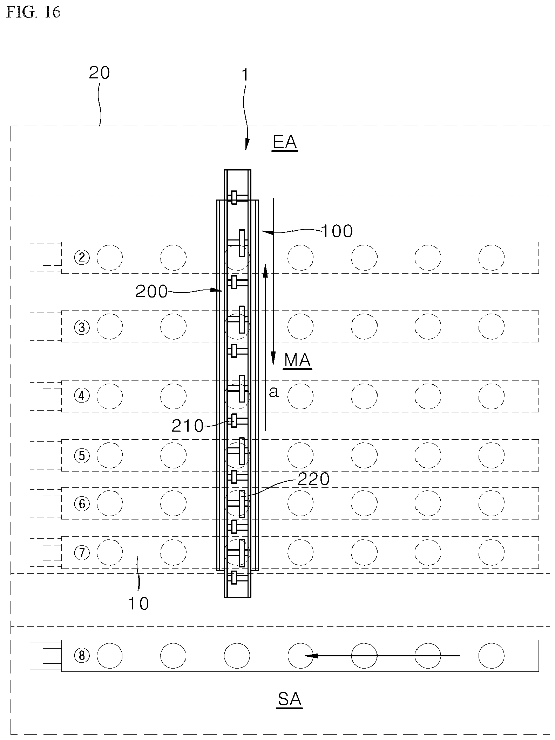

FIG. 16 is a diagram showing a state in which a new gutter is supplied to the gutter supply area.

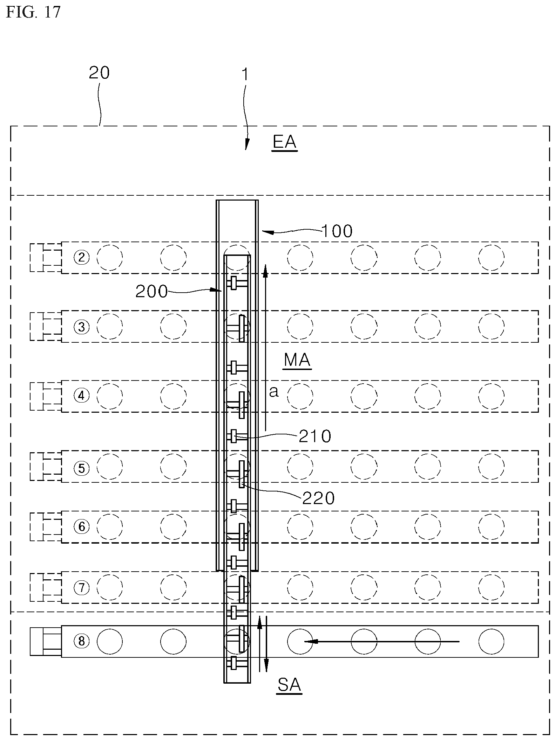

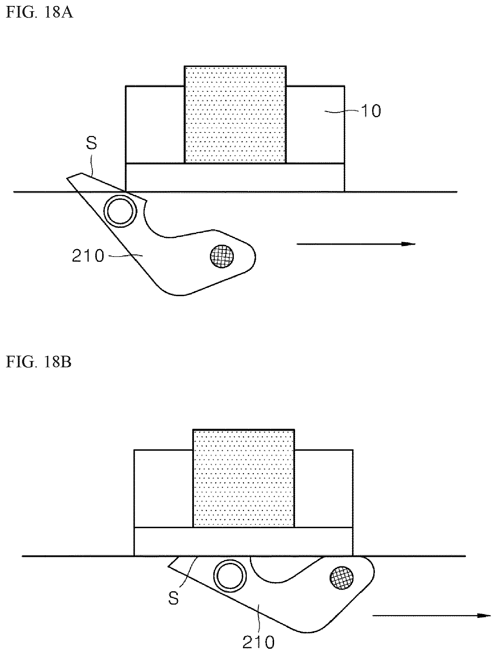

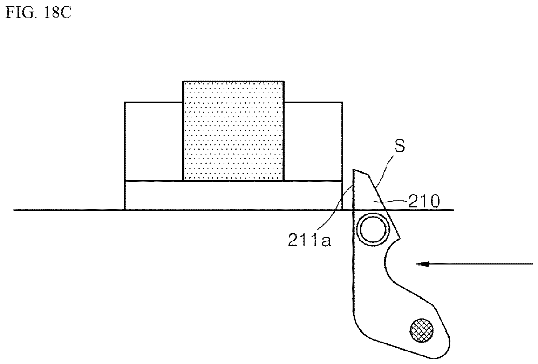

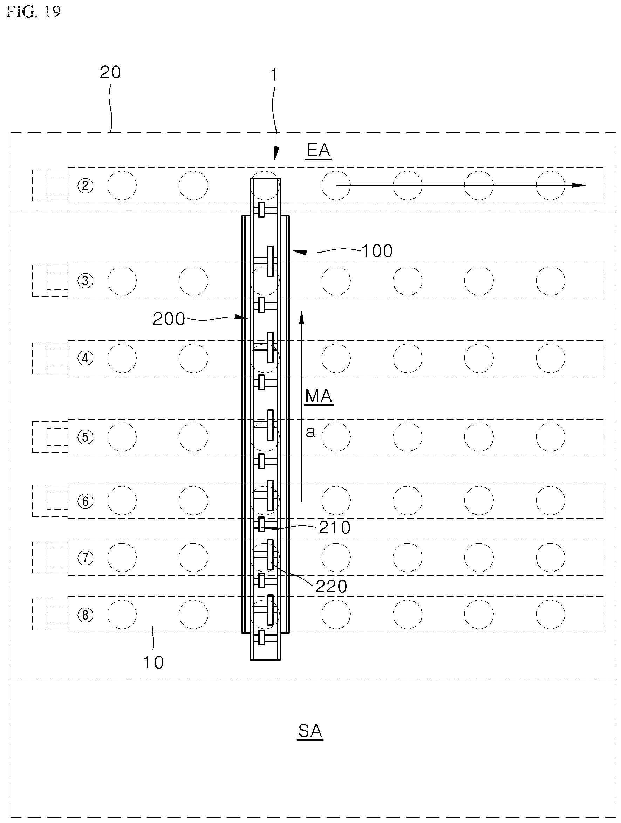

FIG. 17 is a diagram showing a process for pushing the new gutter of FIG. 16 usingthe pushing means according to the present disclosure. FIG. 18A and FIG. 18B and FIG. 18C are a diagram showing a process in which the gutters may be pressed by the first push blocks. FIG. 19 is a diagram showing a process of moving the new gutter of FIG. 17 along a gutter supply direction.

Referring to FIG. 16, after the first gutter 10 has been discharged, the support frame 230 is displaced in the opposite direction to the gutter movement direction a underactuation of the driver cylinder 300. At this time, one end of the support frame 230 is exposed to the gutter supply area SA.

In this regard, when the first reference spacing is set, the first push block 210among the first and second push blocks 210 and 220 may be in a push-able state, and the second push block 220 among the first and second push blocks 210 and 220 may be in a non-push-able state.

Referring to FIG. 17, the driver cylinder 300 moves the support frame 230 along the gutter movement direction a.Accordingly, a rear face of the supplied eighth gutter 10 may be pushed by the first push block 210 such that the supplied eighth gutter 10may be displaced along the gutter movement direction a as shown in FIG. 19.

Referring to FIG. 18A and FIG. 18B and FIG. 18C, the first push block 210 is displaced along the opposite direction to the gutter movement direction a.That is, one end of the support frame 230 may move back to the gutter supply area SA.Each of the first and second push blocks 210 and 220 according to the present disclosure may be configured to rotate within a rotation angle range within 90 degreesalong the counterclockwise direction.

Accordingly, while one end of the support frame 230 has moved back to the gutter supply area SA, the inclined face S of the first push block 210 or the second push block 220 is in contact with the bottom face of the already supplied gutter 10, and the first push block 210 or the second push block 220 is rotated counterclockwise. Then, the rotated first push block 210 or the rotated second push block 220is in the push-able statein the gutter supply area.

Therefore, when a new gutter 10 is supplied to the gutter supply area SA, the gutter may be sequentially displacedby the first reference spacing or the second reference spacing in the above-described manner.

That is, the controller 400 may control the driver cylinder 300 to move the support frame 230 along the gutter movement direction a.At this time, the push face 211a of the first push block 210 standing upright in the push-able state is closely attached to the rear face of the gutter 10.The gutter 10 may be sequentially displaced bythe first reference spacing under the movement of the support frame 230 while being pressed by the first push block 210.

In another example,the controller 400 according to the present disclosure may set the second reference spacing. In this case, the first push blocks 210 may be in a non-push-able state. The second push blocks 220 may be in a push-able state and may push the gutters 10 by the second reference spacing.

In the above example, the push blocks are arranged in the two rows and the first and second reference spacings are defined. However, the present disclosure is not limited thereto. The push blocks are arranged in at least three rows and at least three reference spacingsmay be defined.

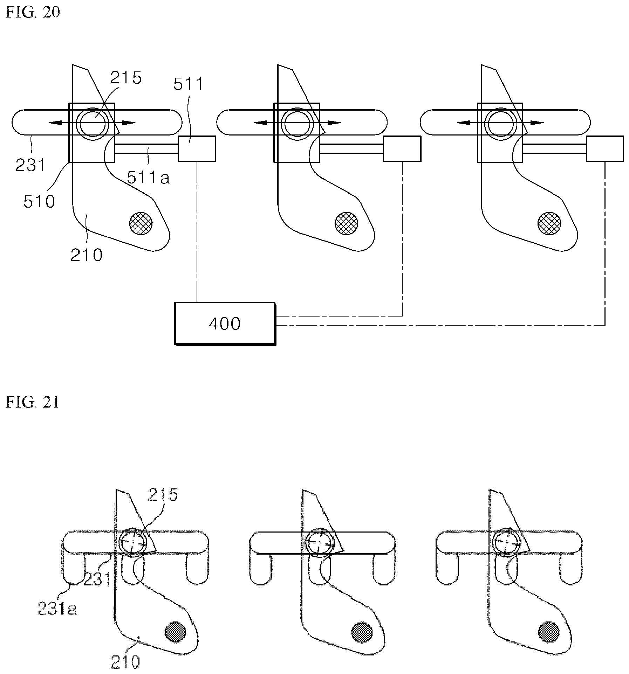

FIG. 20 is a diagram showing another example of varying each ofa spacing the first push blocks and a spacing between the second push blocks.

Referring to FIG. 20, each of the first rotation holes 231 and the second rotation holes 232 formed in the support frame 230 according to the present disclosure may be an elongate hole having a predefined length.

The first rotation shaft 215 coupled to the first push block 210 is rotationally received in the first rotation hole 231.At the same time, the first rotation shaft 215 slides along the first rotation hole 231.A position of the first rotation shaft 215 may be changed.

Further, each of the first rotation holes 231 protrudes to one side of the support frame 230.First bars 510 are disposed on one side of the support frame 230.The first bar 510 are coupled to an end of the first rotation shaft 215. One end of the first bar 510 is connected to a first cylinder 511 having a first shaft 511a which may be extendable or retractable. The first cylinder 511 is fixed to the support frame 230.The first cylinder 511 is driven under the control of the controller 400.

Accordingly, a horizontal position of the first bar 510 may be changed based on an amount by whichthe first shaft 511a extends or retracts. At the same time, rotational angles of the first rotation shafts 215 may be varied to be different from each other.

Thus, in accordance with the present disclosure, the first reference spacing between the first blocks 210 may vary.

In addition, a scheme for varying the second spacing between the second push blocks 220 is substantially the same asa scheme for varying the first spacing between the first push blocks 210 as described above. Thus, description thereof will be omitted.

FIG. 21 is a diagram showing an example in which rotation support holes are formed in the rotation hole of FIG. 20.

Referring to FIG. 21, a number of first rotation support holes 231a are formed ata bottom face of the first rotation hole 231 of the elongate hole shape. The first rotation support holes 231a may be cut so as to have a predefined length and are respectively positioned at multiple locations on a bottom of an inner face of each of the first rotation holes 231 and may be defined downwardly. Further, each of upper ends of the first rotation support holes 231a is formed in a concave shape.

Therefore, when the position of the first rotation shaft 215 is changed, the first rotation shaft 215 is displaced to a top of one of the first rotation support holes 231a.Then, the first rotation shaft 215 may be displaced downwardlyand then may fit into a corresponding first rotation support hole 231a. In this regard, the upper end of the first rotation support hole 231a is concave, the first rotation shaft 215 inserted into the first rotation support hole 231a may not be easily removed from the first rotation support hole 231ainto the first rotation hole 231.Therefore, the first rotation shaft 215 may be stably rotationally received in the first rotation support hole 231a.

In accordance with the present disclosure, a position of the first rotation shaft 215 may be displaced to one of the first rotation support holes 231a and then may berotationally received therein. Thus, the first spacing between the first rotation shafts 215 coupled to the first push blocks 210 may be variably set.

Further, a second spacing between the second rotation shafts 225 coupled to the second push blocks 220 may be adjusted in the same manner as the above manner in which the first spacing between the first rotation shafts 215 coupled to the first push blocks 210 is adjusted.

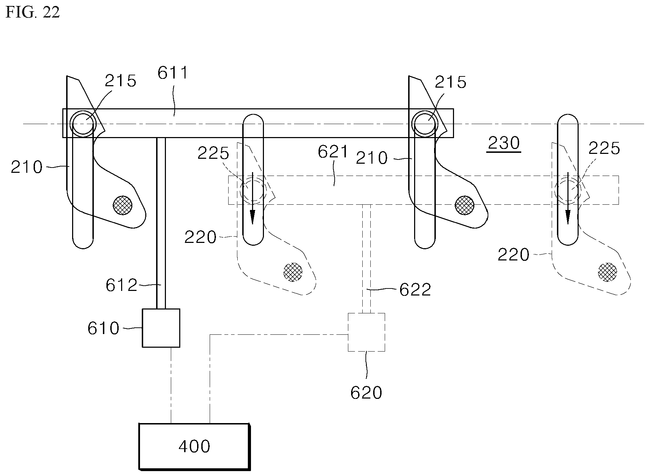

FIG. 22 is a diagram showing another example of an apparatus for transferring a gutter for hydroponics according to the present disclosure.

Referring to FIG. 12, the apparatus for transferring the gutter for hydroponics according to the present disclosure has substantially the same configuration as that of the device in accordance with the above-described example.

However, the first push blocks 210 and the second push blocks 220 may be arranged in one row.

The first and second push blocks 210 and 220 may be arranged and spaced from each other by the different reference spacings and may be selectively brought into the push-able state.

The push blocks according to the present disclosure include the first push blocks 210 spaced from each other by the first reference spacing, and the second push blocks 220 spaced from each other by the second reference spacing. The first and second push blocks 210 and 220 may be arranged alternately with each other.

The first rotation holes 231 and the second rotation holes 232 formed in the support frame 230 may be arranged alternately with each otheralong the gutter movement direction.

In this regard, the first and second push blocks 210 and 220 may be spaced apart from each other by a predefined distance so that the first and second push blocks 210 and 220do not interfere with each other during rotations thereof.

The first push blocks 210 ascend or descendunder an operation of the first elevator 610.

The first elevator 610 has a first connection bar 611 and a first elevating shaft 612 for elevating the first connection bar 611.The first elevator 610 is driven under the control of controller 400.

The first connection bar 611 is disposed ata side of the support frame 230.

The first rotation shaft 215 protrudes to one side of the support frame 230.This protruding portion is rotationally supported by the first connection bar 611.

Further, the second push blocks 220 movesup and downunderan operation of a second elevator 620.The second elevator 620 has a second connection bar 621 and a second elevating shaft 622 for elevating the second connection bar 621.The second elevator 620 is driven under the control of controller 400.

The second connection bar 621 is disposed at the other side of the support frame 230.

The second rotation shaft 225 protrudes to the other side of the support frame 230.This protruding portion is rotationally supported by the second connection bar 621.

In this way, the first and second connection bars 611 and 621 are respectively disposed at both opposing sides of the support frame 230.

Each of the first rotation holes 231 may be embodied as an elongate hole extending along a vertical direction.

The controller 400 controls the first elevator 610to move up and down the first elevating shaft 612.Accordingly, the first rotation shaft 215 rotationally supported by the first connection bar 621 moves up and down along the first rotation hole 231 of the elongate hole shape.

Therefore, when the first reference spacing is selected, the controller 400 controls the first elevator 610 to move up the first rotation shaft 215 to a top of the first rotation hole 231 so that a top of the first push block 210 is brough into in the push-able stateas described above.

At this time, the controller 400 controls the second elevator 620 to lower the second rotation shaft 225 to a bottom of the second rotation hole 232 to bring a top of the second push block 220 into the non-push-able stateas described above.

In this regard, a configuration and a driving scheme of the second elevator 620 may be the same as those of the first elevator 610 as described above.

In another example, when the second reference spacing is selected, the controller 400 controls the second elevator 620 to move up the second rotation shaft 225 to the top of the second rotation hole 232 to bring the top of the second push block 220 into the push-able state as described above.

At this time, the controller 400 controls the first elevator 610 to lower the first rotation shaft 215 to the bottom of the first rotation hole 231 to bring the top of the first push blocks 210 into the non-push-able stateas described above.

In this way, in accordance with the present disclosure, when the first and second push blocks 210, 220 are arranged in a row, the gutter may be displaced by a selected one of the first reference spacing and the second reference spacing.

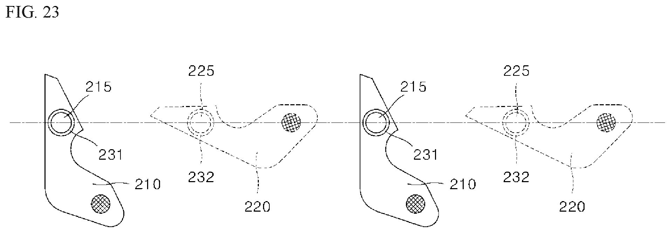

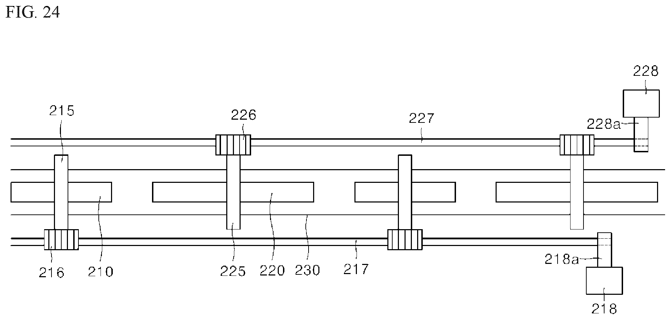

FIG. 23 is a diagram showing another example of an apparatus for transferring a gutter for hydroponics according to the present disclosure.FIG. 24 is a plan view showing a configuration in which each of first and second push blocks is rotatable.

Referring to FIG. 23 and FIG. 24, the first and second push blocks 210 and 220 may be rotatable and may be arranged in a row along the gutter movement direction a.

In this regard, when the first push blocks 210 are used to move the gutter, the first push blocks 210 may be in thepush-able state in which each of the first push blocks 210 stand upright. When the first push blocks 210 are not used to move the gutter, the first push blocks 210 may be in a non-push-able state.

Gears216 may be respectively installed at ends of the first rotation shafts 215 coupled to the first push blocks 210.The gears 216 may be connected to each otherviaa first gear chain 217.The first gear chain 217 movesunder rotation of a shaft 218a of a first drive motor 218.The first drive motor 218 is driven under the control of the controller 400.

Thus, when the first reference spacing is selected, the controller 400 controls the first drive motor 218 to move the first gear chain 217.The gears 216 respectively coupled to the first rotation shafts 215 is rotated under the movement of the first gear chain 217 and thus the first push blocks 210 are rotated so as to be positioned into the push-able state.

At this time, the controller 400 controls the second drive motor 228 to move the second gear chain 227.The gears 226 respectively coupled to the second rotation shafts 225 are rotated in a direction opposite to the rotation direction of the first rotation shaft 215 under the movement of the second gear chain 227, and thus the second push blocks 220 do not stand upright but lie in a horizontal manner. Accordingly, the second push blocks may be in the above-described non-push-able state.

According to the above configuration and operation in accordance with the present disclosure, the moving unitsarranged so as to be spaced from each other bythe different gutter movement spacingis implemented into one body, so that the gutter movement spacing may be variably set according to a growth amount of the crop.

Further, in accordance with the present disclosure, when the gutter movement spacing is set, nutrient liquid required for crop growth may be automatically supplied to each moving gutter.

Hereinafter, the hydroponics system according to the present disclosure will be described.

The hydroponic system according to the present disclosure may include an apparatus for transferring the gutter as described in the above-described examples.

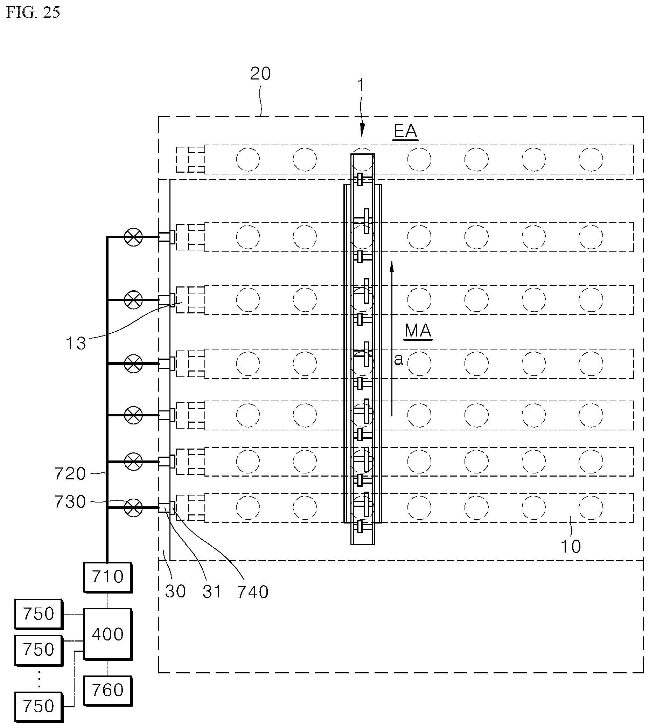

FIG. 25 is a diagram showing a configuration of the hydroponics system according to the present disclosure.

Referring to FIG. 25, the hydroponic system according to the present disclosure includesthe main body 20, the above-described apparatus 1 for transferring the gutter, and a nutrient liquid supply 700.

The above-described apparatus 1 for transferring the gutter is disposed at the main body 20.

The nutrient liquid supply 700 includes a nutrient liquid supplier 710, supply pipes 720, and supply valves 730.The nutrient supplier 710 supplies the nutrient liquid to the supply pipes 720 under the control of the controller 400.The supply valves 730 are respectively installed at the supply pipes 720 to control an opening and closing amount of a flow path to control a supply amount of the nutrient liquid.

The main body 20 has a guide member 30 for guiding sides of the gutters 10 moving along the gutter movement direction a.

Connection holes 31 are formed in the guide member 30 and arranged and spaced from each other by the first reference spacing and the second reference spacing as described above.

Each of the supply pipes 720 is connected to each of the connection holes 31. A nozzle 740 for supplying the nutrient liquid to a receiving pipe 13 at one side of the gutter displacedtheretois installed in the connection hole 31.

Further, the guide member 30 is provided with sensors 750 for recognizing the moving gutter 10 and transmitting the recognition result to the controller 400.The sensor 750 may be embodied as a distance sensor or an optical sensor. In addition, an image device 760 is installed on the main body 20.The imaging device 760 captures an image of the moving gutter 10 and transmits the captured image to the controller 400.The image includes images of crops accommodated in the gutter 10.

The controller 400 calculates a growth amount of each of leaves of the crops based on the image.

The controller 400 may preset a supply amount of the nutrient liquid based on the calculated growth amount.

More specifically, the gutters 10 are displaced along the gutter movement direction by the first reference spacing or the second reference spacing.

The sensor 750 recognizes the moving gutter 10.The imaging device 760 acquires an image of the displaced gutter 10 and transmits the image to the controller 400.

The controller 400 calculates the above-described growth amountof the crop based on the acquired image.

The controller 400 sets the nutrient liquid supply amount corresponding to the calculated growth amount.The controller 400 controls the opening and closing amount of the supply valve 730 to supply the set nutrient liquid supply amount. The nutrient liquid of the set nutrient liquid supply amountmay be supplied to the receiving pipe 13 of the gutter 10 displaced to a target position through the supply nozzle 740. The nutrient liquid supplymay result in crop growth.

Thus, in accordance with the present disclosure,a growth state of the crop that is accommodated in each gutter 10 displacedbyatarget reference spacing may be identified and the nutrient liquid amount based on the growth state may be automatically supplied to the crop.

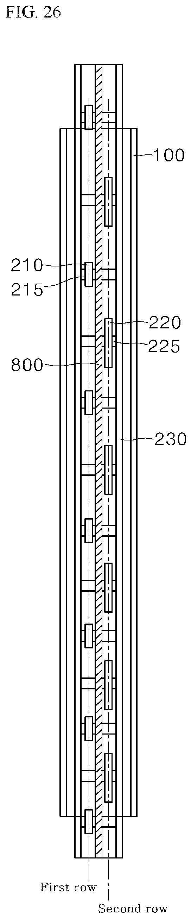

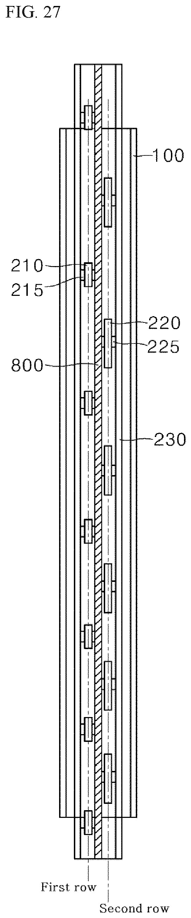

FIG. 26 and FIG. 27 are diagrams showing other examples of pushing means according to the present disclosure, respectively.

Referring to FIG. 26, the first and secondrows are defined in the support frame 230 according to the present disclosure.The first push blocks 210 are arranged in the first row and are spaced from each other by the first reference spacing. Further, the second push blocks 220 are arranged in the second row and are spaced from each other by the second reference spacing.

A partitioning plate 800 is installed in the support frame 230.The partitioning plate 800 may separate the first and second rows from each other.In this regard, the first and second rotation shafts 215 and 225 may extend through the partitioning plate 800.

Further, as shown in FIG. 27, the first rotation shafts 215 are rotationally coupled to one side of the support frame 230 and the partitioning plate 800, while the second rotation shafts 225 are rotationally coupled to the other side of the support frame 230 and the partitioning plate 800.

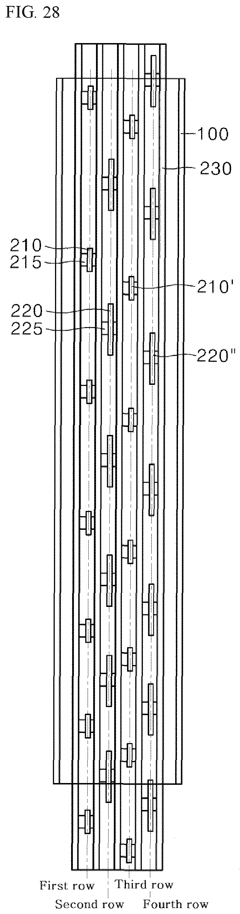

FIG. 28 is a diagram showing another example of pushing means according to the present disclosure.

As shown in FIG. 28, multiple rows may be defined in a support frame 230 according to the present disclosure.

First to fourth push blocks 210, 220, 210', and 220' are disposed in a groove defined in the support frame 230.

For example, when four rows are formed in the support frame 230, first push blocks 210are arranged in a first row and are spaced from each other by a first reference spacing, second push blocks 220are arranged in asecond row and are spaced from each other by asecond reference spacing, third push blocks 210'are arranged in a third row and are spaced from each other by a third reference spacing, and fourth push blocks220' are arranged in a third row and are spaced from each other by a fourth reference spacing.

In this regard, the first to fourth reference spacings may be different from each other. The first to fourth rows may be arranged in a direction perpendicular to the length direction of the support frame.

Accordingly, in accordance with the present disclosure, one of the first to fourthreference spacingsmay beselected to be used. Thus, one ofthe first to fourth rows corresponding to the selected spacingand thus the push blocks corresponding thereto may be selected to be used.

In another example, each of the rows may be disposed in an independent support frame 230.The support frames 230 may be adjacent to each other and may be integral to each other or may be detachably coupled to each other. Thus, the number of the rows may vary.

Although the embodiments of the present disclosure have been described above with reference to the accompanying drawings, the present disclosure is not limited to the above embodiments, but may be implemented in various different forms. A person skilled in the art will be able to appreciate that the present disclosure may be embodied in other concrete forms without changing the technical spirit or essential characteristics of the present disclosure. Therefore, it should be understood that the embodiments as described above are not restrictive but illustrative in all respects.

## Claims

1. Anapparatus for transferring a gutter for hydroponics, the apparatus comprising:
a movement guide having a groove defined therein, wherein the groove extendsalong a gutter movement direction; and
pushing means configured to reciprocatein the gutter movement directionunder external power, wherein the pushing meansincludesfirst and second push block arrays disposed in the groove of the movement guide,
wherein the first push block array includes a plurality of first push blocks arranged in a first row along the gutter movement direction and spaced from each other by a first spacing,
wherein the second push block array includes a plurality of second push blocks arranged in a second row along the gutter movement direction and spaced from each other by a second spacing,
wherein the first and second rows are adjacent to each other in a perpendicular direction to the gutter movement direction,
wherein the first and second spacings are different from each other,
wherein each of the first and second push blocksis rotatable around a rotation axis, wherein the rotation axis is positioned at an eccentric position of each of the first and second push blocks,
wherein each of the first and second push blocksswitches to between a push-able statecapable of pushing the gutter and a non-push-able state of non-capable of pushing the gutter.

2. The apparatus of claim 1, wherein the pushing means has a partitioning plate to separate the first and second rows from each other.

3. The apparatus of claim 1, wherein the pushing means includes first and second support frames corresponding to the first and second frames, wherein the first support frame supports the first push blocks, and the second support frame supports the second push blocks,
whereinfirst and second support framesare adjacent to each other andare integral to each other or are detachably coupled to each other.

4. The apparatus of claim 1, wherein the pushing means furtherincludes a support frame having both opposing sidewalls and a bottom connecting the both opposing sidewalls to each other, wherein the support frame supports the first and second push blocks,
wherein firstholes are defined in each of the both opposing sidewalls and are arranged in the gutter movement direction and are spaced from each other by the first spacing,
wherein secondholes are defined in each of the both opposing sidewalls and are arranged in the gutter movement direction and are spaced from each other by the second spacing,
wherein the pushing means furtherincludes:
first rotation shafts rotatably respectively received in the first holes and respectivelyfixed to the eccentric positions of the first push blocks; and
secondrotation shafts rotatably respectively received in the second holes and respectively fixed to the eccentric positions of the second push blocks.

5. The apparatus of claim 4, wherein one face of an upper portion of each of the first and second push blocks acts as a push face in close contact with and pushing one face of the gutter.

6. The apparatus of claim 4, wherein a weight having a predetermined weight is disposed in a lower portion of each of the first and second push blocks such that each of the first and second push blocks rotates so as to stand upright and thus is brought into the push-able state.

7. The apparatus of claim 4, wherein each of the first and second holes extends in an elongate manner and inthe gutter movement directionsuch that a position of each of the first and second rotation shafts is displaced along the gutter movement direction.

8. The apparatus of claim 7, wherein shaft-receivinggrooves are defined in a bottom face of each of the first and second elongateholesand are arranged in the gutter movement direction and are spaced from each other,
wherein each ofthe rotation shafts is inserted into one of the shaft-receiving grooves and is rotatably received therein.

9. Anapparatus for transferring a gutter for hydroponics, the apparatus comprising:
a movement guide having a groove defined therein, wherein the groove extendsalong a gutter movement direction; and
pushing means configured to reciprocatein the gutter movement direction under external power, wherein the pushing meansincludes a plurality offirst push blocks and a plurality of second push blocks disposed in the groove of the movement guide,
wherein the first and second push blocksare arranged in a single row along the gutter movement direction,
wherein the plurality offirst push blocksare spaced from each other by a first spacing,
wherein the plurality of second push blocks are spaced from each other by a second spacing different from the first spacing,
wherein each of the first and second push blocks is rotatable around a rotation axis, wherein the rotation axis is positioned at an eccentric position of each of the first and second push blocks,
wherein each of the first and second push blocks switches to between a push-able state capable of pushing the gutter and a non-push-able state of non-capable of pushing the gutter,
wherein the first push blocks switches to the push-able state while the second push blocks switches to the non-push-able state; or
the first push blocks switches to the non-push-able state while the second push blocks switches to the push-able state.

10. The apparatus of claim 9, wherein the apparatus further comprises an elevatoroperating under control of a controller, wherein the elevator moves up or down each ofthe first and second push blocks such that each of the first and second push blocksswitches to the push-able state or the non-push-able state, respectively.

11. The apparatus of claim 9, wherein the apparatus further comprisesa gearrotating under control of a controller, wherein the gear is couped to a rotation shaft coupled toeach of the first and second push blocks,
wherein the gear rotates such that each of the first and second push blocks switches to the push-able state or the non-push-able state.

12. A hydroponics system comprising:
theapparatus for transferring the gutter of claim 1; and
a nutrient liquid supply for supplyinga preset supply amount of nutrient liquid to the gutter displacedby a selected one of the first and second reference spacings.
